# FASCICULE DE BREVET EUROPEEN

(11) **EP 0 554 468 B1**
(45) Date de publication et mention de la délivrance du brevet: **15.10.1997**
(21) Numéro de dépôt: 92101214.2
(22) Date de dépôt: 25.01.1992
(51) Int. Cl.: A23L 1/216

(54) **Procédé d'obtention de pommes de terre cuites à l'eau ou à la vapeur et surgelées**
Verfahren zum Erhalten von gekochten und tiefgefrorenen Kartoffeln
Process for obtaining cooked and deep-frozen potatoes

(43) Date de publication de la demande: 11.08.1993
(73) Titulaire: Société des Produits Nestlé S.A., 1800 Vevey (CH)
(72) Inventeur: Cadas, Martial, F-60480 Montreuil/Breche (FR); Jamet, Luc, F-60000 Beauvais (FR)

(56) Documents cités:
- DE-A- 2 549 434
- DE-A- 2 822 964
- FR-A- 2 392 609
- US-A- 4 800 098

## Description

La présente invention est relative à un procédé d'obtention de pommes de terre cuites à l'eau ou à la vapeur et surgelées.

Les pommes de terre cuites à l'eau ou à la vapeur sont connues, à la différence des pommes de terre frites, pour ne pas supporter un traitement de surgélation. En effet, et quelle que soit la variété de pomme de terre utilisée, le produit surgelé présente après réchauffage pour consommation une texture farineuse, ainsi qu'un délitement superficiel. De plus, il apparaît un affaissement du produit qui peut être suffisamment important pour le faire ressembler à un amas de sable.

Ainsi, les tentatives consistant à cuire à l'eau ou à la vapeur des pommes de terre puis à les refroidir éventuellement dans l'eau froide et enfin à les surgeler selon le procédé classique I.Q.F. (Individual Quick Freezing), c'est à dire par circulation d'air à -40°C pour obtenir une surgélation à coeur en quelques minutes n'ont jamais permis de fournir un produit satisfaisant.

Or, il peut être intéressant, particulièrement dans le domaine des plats cuisinés surgelés, de proposer des pommes de terre cuites qui conservent une texture comparable à celle d'un produit identique n'ayant pas subi de surgélation.

On connaît, par exemple par le document FR-A-2 392 609, un procédé de cuisson de pommes de terre en plusieurs étapes suivi d'un chauffage à l'air du produit cuit. Selon ce document, le produit cuit selon ce procédé peut ensuite être surgelé puis réchauffé pour consommation en ne présentant pas de dégradation de sa texture.

Le principal inconvénient de ce procédé réside dans la difficulté à le mettre en oeuvre industriellement, par ailleurs l'expérience montre que les procédés de cuisson en plusieurs étapes ont tendance à générer des goûts désagréables. Ceci explique d'ailleurs que des pommes de terre cuites et surgelées de bonne qualité n'existent pas à ce jour sur le marché, à la connaissance du déposant.

La présente invention a ainsi pour but de résoudre ce problème en proposant un procédé de cuisson simple comparable à une cuisson domestique et en maîtrisant les conditions de refroidissement et de surgélation qui elles mêmes restent simples.

La présente invention a ainsi pour objet un procédé d'obtention de pommes de terre cuites à l'eau ou à la vapeur puis surgelées, dans lequel des pommes de terre sont cuites puis refroidies, et enfin surgelées, caractérisé en ce que des pommes de terre sont refroidies de telle manière que la température à coeur des pommes de terre s'abaisse à température ambiante en plus de 10 minutes, et en ce que la surgélation est réalisée en deux étapes de telle manière que, dans une première étape, le coeur des pommes de terre est maintenu au palier de cristallisation de l'eau pendant au moins 20 minutes, puis, dans une deuxième étape, la surgélation est poursuivie jusqu'à atteindre la température de stockage.

De cette manière, le délitement superficiel est supprimé et la texture farineuse est réduite.

D'autres caractéristiques et avantages ressortiront à la suite de la description qui va suivre.

Dans un premier temps, des pommes de terre pelées ou non sont cuites. La cuisson est préférablement réalisée à la vapeur, par tout moyen connu, ceci permettant d'éviter un lessivage du produit de nature à éliminer certains composés. Mais un autre mode de cuisson, par exemple à l'eau, peut être mis en oeuvre si les caractéristiques de goût du produit obtenu sont considérées comme satisfaisantes.

Préférablement, particulièrement dans le cadre de la réalisation de pommes de terre cuites à la vapeur, on peut choisir une variété de pommes de terre à chair ferme telle que la BF 15.

Par ailleurs, le calibre de la pomme de terre est, en lui même, un paramètre important, les meilleurs résultats du point de vue de la texture étant obtenus avec des tubercules de petite taille, c'est à dire d'un calibre inférieur ou égal à 35 mm. On doit noter à cet égard que c'est le calibre des tubercules qui est important et non la taille des morceaux traités après un éventuel découpage des tubercules. En effet la structure et la composition, particulièrement en amidon, d'un petit tubercule sont différentes de celles d'un tubercule de plus grosse taille.

Enfin, la teneur en matière sèche du produit de base est aussi importante. Avec des tubercules ayant une teneur en matière sèche inférieure à 17% en poids, il apparaît des hétérogénéités de cuisson importantes. Par ailleurs, si la teneur en matière sèche devient supérieure à 19% en poids, la texture farineuse apparaît beaucoup plus facilement.

On notera par ailleurs que, pour bénéficier au maximum des avantages du procédé, il convient d'avoir une cuisson optimisée déterminable en fonction de la pomme de terre traitée. Si la cuisson est trop faible, le produit garde un mauvais goût et une texture hétérogène, si elle est trop importante, le produit s'effondre irréversiblement. Dans le cas d'une BF 15 de calibre inférieure à 35 mm, la cuisson optimale est obtenue à la vapeur pendant 8 minutes.

Après la cuisson, alors que les pommes de terre sont à une température voisine de 95°C, ces pommes de terre cuites subissent un refroidissement. Pour cela, elles sont soumises à un flux d'air à une température comprise entre la température ambiante et 0°C. Un refroidissement à l'air froid à une température voisine de 0°C est préférable pour des raisons de sécurité bactériologique.

Cette étape de refroidissement est essentielle et il convient, pour obtenir un produit final satisfaisant, que le refroidissement soit suffisamment lent. Plus particulièrement, afin d'éviter une dégradation de la texture après surgélation, il convient que la température à coeur de chaque pomme de terre n'atteigne pas la température ambiante en moins de 10 minutes. Préférablement, le coeur de chaque pomme de terre doit atteindre une température de 20°C après un refroidissement compris entre 10 et 30 minutes, au delà de 30 minutes le procédé fonctionne encore mais devient plus difficilement industrialisable.

Préférablement, le refroidissement est réalisé en 15 minutes par un flux d'air d'une température de 0°C et circulant à une vitesse modérée de l'ordre de 2 à 3 m/s. En effet, un refroidissement plus rapide, par exemple dans l'eau froide, suivi d'un maintien en température et d'une surgélation donne un résultat moins satisfaisant.

Après ce refroidissement, les pommes de terre sont surgelées.

Il est ainsi obtenu un produit final d'où le délitement est absent et pour lequel la structure farineuse a été réduite. Malgré tout, dans le cadre d'une surgélation I.Q.F., la structure farineuse est encore présente de même que l'affaissement général du produit.

Or, il a été trouvé qu'une surgélation particulière permet de supprimer ces inconvénients.

La surgélation dans le procédé selon l'invention est ainsi réalisée en deux étapes. Dans une première étape, les conditions de traitement sont telles que le coeur des pommes de terre est maintenu au palier de cristallisation de l'eau, c'est à dire à une température inférieure à 0°C de l'ordre de -1° C à -2°C, pendant une période comprise entre 20 minutes et 60 minutes. Dans une deuxième étape, l'eau contenue dans le produit ayant gelé, la température du produit est amenée à sa température de stockage, c'est à dire au delà de -20°C.

Cette surgélation lente est, elle aussi, nécessaire pour éviter la dégradation de la texture, si le palier de cristallisation constituant la première étape de surgélation est d'une durée inférieure à 20 minutes il apparaît en effet un affaissement du produit et la texture farineuse ne disparaît pas totalement malgré le refroidissement préalable. Par ailleurs, si ce palier dure plus de 60 minutes, le procédé, bien que fonctionnant encore, devient difficilement industrialisable. De plus, un contact prolongé avec l'air risque de déclencher des réactions d'oxydation qui, dégradant le produit, doivent être évitées.

On notera à cet égard qu'il est possible d'effectuer la surgélation non pas sur des pommes de terre en vrac mais sur des pommes de terre conditionnées sous vide après refroidissement, les risques d'une oxydation ultérieure étant alors supprimés. Dans ce cas, il est important que le conditionnement sous vide soit réalisé après le refroidissement, en effet, si les pommes de terre sont conditionnées sous vide avant même de les cuire, le goût du produit final a été jugé moins bon.

Préférablement, pour réaliser le palier de cristallisation puis pour abaisser la température du produit jusqu'à une température de stockage, la surgélation est réalisée en trois phases de traitement. La première phase dure 20 minutes et est réalisée par circulation d'air à une température de -5°C à une vitesse de 4 m/s. La deuxième phase dure également 20 minutes et est réalisée par circulation d'air à une vitesse de 9 m/s à une température de -15°C puis par circulation d'air à une vitesse de 9 m/s à une température de -20°C. Ainsi, le palier de cristallisation dure environ 20 minutes.

Il est ainsi obtenu un produit final présentant des caractéristiques organoleptiques après réchauffage pour consommation très proches de celles d'un même produit ayant subi le même traitement de cuisson consommé directement sans phase de surgélation.

Les exemples ci-après illustrent la comparaison du procédé selon l'invention avec, d'une part, un procédé classique de surgélation I.Q.F. et, d'autre part, un procédé théorique dans lequel le palier de cristallisation dure 2 heures. Dans les trois exemples, les pommes de terre traitées sont les mêmes.

### Exemple 1:

Les pommes de terre, après cuisson, ont subi un refroidissement rapide qui a amené le coeur des pommes de terre à température ambiante en 5 minutes. Le palier de cristallisation a duré 5 minutes, puis les pommes de terre ont été amenées à -40°C, le cycle total constitué par le refroidissement, le palier de cristallisation et la fin de la surgélation ayant duré 18 minutes.

Il a été obtenu des tubercules délités, une texture sableuse et affaissée. Le produit n'est pas satisfaisant.

### Exemple 2:

Les pommes de terre, après cuisson, ont subi un refroidissement lent qui a amené le coeur des pommes de terre à température ambiante en 15 minutes. Le palier de cristallisation a duré 20 minutes, puis les pommes de terre ont été amenées à -40°C, le cycle total constitué par le refroidissement, le palier de cristallisation et la fin de la surgélation ayant duré 65 minutes.

Le produit fabriqué selon ce procédé est tout a fait satisfaisant.

### Exemple 3:

Les pommes de terre, après cuisson, ont subi un refroidissement très lent qui a amené le coeur des pommes de terre à température ambiante en 30 minutes. Le palier de cristallisation a duré 2 heures, puis les pommes de terre ont été amenées à -40°C, le cycle total constitué par le refroidissement, le palier de cristallisation et la fin de la surgélation ayant duré 3 heures.

Les tubercules sont intacts, la texture est lisse mais il est apparu une décoloration et une dégradation du goût caractéristiques d'un début d'oxydation.

Par ailleurs des essais ont été réalisés pour étudier l'influence de la durée du palier de cristallisation sur la texture. Dans ces essais, les pommes de terre, après cuisson, ont subi un refroidissement lent qui a amené le coeur des pommes de terre à température ambiante en 15 minutes.

La surgélation a été réalisée de manière à obtenir un palier de cristallisation de 5, 10, 15, 20, 30, 60 minutes.

Les résultats sont résumés dans le tableau ci-après.

| Palier de cristallisation | Texture |
|---|---|
| 5 minutes | sableuse |
| 10 minutes | farineuse |
| 15 minutes | légèrement farineuse |
| 20 minutes | satisfaisante |
| 30 minutes | satisfaisante |
| 60 minutes | satisfaisante |

L'échantillon obtenu avec un palier de cristallisation de 60 minutes présente une légère dégradation du goût, ceci signifie qu'une dégradation est à craindre en cours de conservation.

Il est ainsi proposé un traitement simple de pommes de terre cuites qui supprime les problèmes habituellement rencontrés lors de la surgélation de pommes de terre cuites à l'eau ou à la vapeur.

## Revendications

1. Procédé d'obtention de pommes de terre cuites à l'eau ou à la vapeur et surgelées, dans lequel des pommes de terre sont cuites puis refroidies, et enfin surgelées, caractérisé en ce que des pommes de terre sont refroidies de telle manière que la température à coeur des pommes de terre s'abaisse à température ambiante en plus de 10 minutes, et en ce que la surgélation est réalisée en deux étapes de telle manière que, dans une première étape, le coeur des pommes de terre est maintenu au palier de cristallisation de l'eau pendant au moins 20 minutes, puis, dans une deuxième étape, la surgélation est poursuivie jusqu'à atteindre la température de stockage.

2. Procédé selon la revendication 1, dans lequel, dans la première étape, le coeur des pommes de terre est maintenu à une température de - 1°C à -2°C pendant une période comprise entre 20 minutes et 60 minutes.

3. Procédé selon l'une des revendications précédentes, dans lequel le refroidissement est réalisé par circulation d'air.

4. Procédé selon la revendication 3, dans lequel le refroidissement est réalisé en 15 minutes par un flux d'air d'une température de 0°C et circulant à une vitesse de 2 à 3 m/s.

5. Procédé selon l'une des revendications précédentes, dans lequel les pommes de terre traitées sont constituées de tubercules de calibre inférieur à 35 mm.

6. Procédé selon la revendication 5, dans lequel les pommes de terre traitées ont une teneur en matière sèche comprise entre 17% et 19% en poids.

## Claims

1. Process for preparing potatoes cooked in water or steam, and deep-frozen, wherein the potatoes are cooked and then cooled and finally deep-frozen, characterized in that the potatoes are cooled in such a way that the core temperature of the potatoes falls to room temperature in more than 10 minutes, and in that deep-freezing takes place in two steps in such a way that, in the first step, the core of the potatoes is kept at the crystallization stage of water for at least 20 minutes and then, in the second step, deep-freezing is continued until the storage temperature is reached.

2. Process according to claim 1 wherein, in the first step, the core of the potatoes is kept at a temperature of -1°C to -2°C for a period of between 20 and 60 minutes.

3. Process according to one of the preceding claims, wherein cooling is carried out by air circulation.

4. Process according to claim 3, wherein cooling is carried out in 15 minutes by a flow of air at a temperature of 0°C, circulating at a rate of 2 to 3 m/s.

5. Process according to one of the preceding claims, wherein the treated potatoes consist of tubers with a diameter of less than 35 mm.

6. Process according to claim 5, wherein the treated potatoes have a dry matter content of between 17 % and 19% by weight.

## Patentansprüche

1. Verfahren zur Herstellung von mit Wasser oder Dampf gekochten und tiefgefrorenen Kartoffeln, in dem die Kartoffeln gekocht, dann gekühlt und schließlich tiefgefroren werden, dadurch gekennzeichnet, daß Kartoffeln so gekühlt werden, daß die Kerntemperatur in mehr als 10 min auf Raumtemperatur sinkt, und daß das Tiefgefrieren in zwei Schritten vorgenommen wird, wobei im ersten Schritt der Kern der Kartoffeln während mindestens 20 min auf dem Plateau der Wasserkristallisation gehalten wird und im zweiten Schritt das Tiefgefrieren weitergeführt wird, bis die Lagertemperatur erreicht ist.

2. Verfahren nach Anspruch 1, in dem im ersten Schritt der Kern der Kartoffeln während einer Zeit von 20 bis 60 min auf einer Temperatur von -1°C bis -2°C gehalten wird.

3. Verfahren nach einem der vorhergehenden Ansprüche, in dem die Abkühlung durch Luftzirkulation vorgenommen wird.

4. Verfahren nach Anspruch 3, in dem die Abkühlung in 15 min durch einen Luftstrom mit einer Temperatur von 0°C vorgenommen wird, der mit einer Geschwindigkeit von 2 bis 3 m/s zirkuliert.

5. Verfahren nach einem der vorhergehenden Ansprüche, in dem die behandelten Kartoffeln aus Knollen mit einer Größe unter 35 mm bestehen.

6. Verfahren nach Anspruch 5, in dem die behandelten Kartoffeln einen Trockenmassegehalt von 17 bis 19 Gew.-% haben.
